# EUROPEAN PATENT SPECIFICATION

(11) **EP 1 432 489 B1**
(45) Date of publication and mention of the grant of the patent: **11.08.2010**
(21) Application number: 02772835.1
(22) Date of filing: 04.09.2002
(51) Int. Cl.: B01D 15/08, G01N 30/02, G01N 30/88, B01J 20/281

(54) **METHOD AND APPARATUS FOR ANALYZING ENDOCRINE-DISRUPTING SUBSTANCES IN VITAL SAMPLE**
VERFAHREN UND VORRICHTUNG ZUR ANALYSE VON ENDOKRIN-UNTERBRECHENDEN SUBSTANZEN IN VITALPROBEN
TECHNIQUE ET APPAREIL D'ANALYSE DE SUBSTANCES PERTURBANT L'ENDOCRINE DANS UN PRELEVEMENT

(30) Priority: 05.09.2001 JP 2001268949
(43) Date of publication of application: 30.06.2004
(73) Proprietor: Showa Denko K.K., Tokyo 105-8518 (JP)
(72) Inventor: SHINODA, Akiko, Kawasaki-shi, Kanagawa 210-0867 (JP); HORI, Shinjiro, Nara-shi, Nara 631-0045 (JP); KITAGAWA, Mikiya, Osaka-shi, Osaka 537-0013 (JP)
(74) Representative: Strehl Schübel-Hopf & Partner
(86) International application number: PCT/JP2002/008967
(87) International publication number: WO 2003/022391

(56) References cited:
- EP-A- 0 632 267
- US-A- 4 314 032
- SANNINO ANNA ET AL: "Multiresidue method for determination of organochlorine insecticides and polychlorinated biphenyl congeners in fatty processed foods." JOURNAL OF AOAC INTERNATIONAL, vol. 79, no. 6, 1996, pages 1434-1446, XP002224516 ISSN: 1060-3271
- LEGA R ET AL: "Quantitative determination of organic priority pollutants in sewage sludge by GC/MS." CHEMOSPHERE, vol. 34, no. 8, 1997, pages 1705-1712, XP002224517 ISSN: 0045-6535
- DAVID L. STALLING: "Application of analytical methods research to monitoring oganic residues" INTERNATIONAL CONFERENCE ON ENVIRONMENTAL SENSING AND ASSESSMENT, vol. 1, 1976, XP002224518 New York
- PATENT ABSTRACTS OF JAPAN vol. 2000, no. 21, 3 August 2001 (2001-08-03) & JP 2001 108663 A (SHIMADZU CORP), 20 April 2001 (2001-04-20)

## Description

### TECHNICAL FIELD

The present invention relates to a method and an apparatus for analyzing exogenous endocrine-disrupting chemicals (so-called environmental hormone) and other chemicals suspected of having an endocrine-disrupting action (hereinafter these substances collectively called "endocrine-disrupting substances") in a vital sample. More specifically, the present invention relates to a method and an apparatus for analyzing a vital sample containing one or more endocrine-disrupting substances and rapidly and automatically identifying and determining each substance.

### BACKGROUND ART

In recent years, the effect of endocrine-disrupting substances on health is a strong concern in society. The "endocrine-disrupting substances" is a generic term of exogenous endocrine-disrupting chemicals and chemicals suspected of having an endocrine-disrupting action, and examples of such a substance include dioxin, PCB (polychlorinated biphenyl), phthalic acid esters, bisphenol A, some organic chlorine-base agrochemicals, surfactants, female hormone-like substances, PAH (polycyclic aromatic hydrocarbons), organic tin compounds and the like.

These substances generally have high accumulative property in body and on continuous exposure thereto, the reproductive function or growth process is affected. In particular, exposure to these chemical substances in the period from fetus to growth causes a problem. For assessing the toxicity of these chemical substances in the period from fetus to growth, it is important to analyze endocrine-disrupting substances in a vital sample, particularly, to grasp the amount of these chemical substances to which a fetus or an infant is exposed through a blood from the mother or through the mother's milk. Since a possibility of causing an effect is present even with a very small amount and the mechanism of bringing out the effect is not satisfactorily elucidated, the sensitivity of analysis is demanded to be as high as possible.

However, the endocrine-disrupting substances are not substances having a specific structural feature and are originated in various materials such as incineration ash, industrial waste, industrial raw material, waste gas, natural substance, medical preparation and coating material for marine vessel. Therefore, conventionally known methods for analyzing endocrine-disrupting substances are mostly an individual analysis method of analyzing each chemical substance and moreover, these are a very cumbersome operation requiring huge working, time, organic solvent and the like. Furthermore, the endocrine-disrupting substances are generally fat-soluble and present in the state of being dissolved in fat in a vital sample and at the analysis, separation and removal of this fat content becomes a large problem.

In order to efficiently analyze a large number of endocrine-disrupting substances, studies are being made on the analysis system of automatically analyzing one or more endocrine-disrupting substances at the same time. For example, JP-A-2001-83128 (the term "JP-A" as used herein means an "unexamined published Japanese patent application") describes a simple measuring apparatus for coplanar PCBs, where fat and the like are decomposed through a sulfuric acid-impregnated silica gel, the decomposed materials are removed through a trap column packed with silica gel, and the residue is fractionated by high-performance liquid chromatography and transferred to the analysis means. Also, JP-A-2001-83129 describes a simple measuring apparatus for dioxins, where fat and the like are decomposed through a multilayer silica gel impregnated with a plurality of chemicals, the decomposed materials are removed through a trap column, and the residue is fractionated by high-performance liquid chromatography and transferred to the analysis means. However, these methods have a problem in that only chemically stable compounds indecomposable by a sulfuric acid, an alkali or the like can be analyzed and a treatment for regenerating the trap column adsorbing the decomposition products is necessary.

Also, various methods for analyzing endocrine-disrupting substances using a gas chromatograph-mass spectrometer (GC/MS) have been proposed (see, for example, JP-A-2000-65814 and JP-A-2000-88825). However, as described above, the endocrine-disrupting substances are fat-soluble and the vital sample containing endocrine-disrupting substances contains fat or a fat-soluble high molecular weight component (for example, dye) in a high concentration. Therefore, a complicated pre-treatment step such as the above-described chemical decomposition step using a sulfuric acid, an alkali or the like is necessary and this makes it difficult to rapidly perform an automatic analysis.

On the other hand, the present inventors have announced a method of analyzing organic phosphorus-base agrochemicals in blood by GC/MS using a GPC (gel permeation chromatography) column (see, Mikiya Kitagawa et al., On-Line GPC-GC/MS ni yoru Kecchu Noyakuno Jinsoku Bunseki (Rapid Analysis of Agrochemicals in Blood by On-Line GPC-GC/MS) at the 5th Annual Meeting of The Japanese Association of Science and Technology of Identification (November 11 and 12, 1999)). However, an analysis system capable of simultaneously, rapidly and automatically analyzing endocrine-disrupting substances having various structures has been heretofore not known.

### DISCLOSURE OF INVENTION

The object of the present invention is to provide an analysis system for rapidly and automatically analyzing various endocrine-disrupting substances in a vital sample such as blood or mother's milk.

As a result of extensive investigations to attain the above-described object, the present inventors have found that an analysis of various endocrine-disrupting substances can be simply and easily performed with high precision by a combination of GPC column and GC/MS, particularly, an analysis system capable of simultaneously, rapidly and automatically analyzing various endocrine-disrupting substances can be realized by on-line connecting a specific kind of GPC column and GC/MS. The present invention has been accomplished based on this finding.

That is, the present invention provides the following analysis method and analysis apparatus.
(1) A method for analyzing endocrine-disrupting substances in a vital sample selected from blood, cord blood, urine, mother's milk or biostructure, comprising on-line connecting a gel permeation chromatography (GPC) column and a gas chromatograph-mass spectrometer (GC/MS) via line change-over means, passing a blood, cord blood, urine, mother's milk or biostructure solution containing endocrine-disrupting substances through the GPC column to remove high molecular weight components and water content, accumulating the remaining low molecular weight fractions in the line, and then introducing the fractions all at once into GC/MS to automatically analyze the fractions, wherein the GPC column is a polyvinyl alcohol-base hard gel-packed column or a polystyrene-base hard gel-packed column.
(2) The method for analyzing endocrine-disrupting substances as described in (1) above, wherein the fat content, dye and water content in the vital sample solution are removed by the GPC column.
(3) The method for analyzing endocrine-disrupting substances as described in (1) above, wherein polyvinyl alcohol-base hard gel is used as GPC column packing material, comprising reducing water content in the vital sample to 10% or less.
(4) The method for analyzing endocrine-disrupting substances as described in (1) above, wherein polystyrene-base hard gel is used as GPC column packing material, comprising reducing water content in the vital sample to 2% or less.
(5) The method for analyzing endocrine-disrupting substances as described in (1) above, wherein a mixed solvent of acetone and cyclohexane, a mixed solvent of ethyl acetate and cyclohexane or a mixed solvent of dichloromethane and cyclohexane is used as an eluent for the GPC column.
(6) An apparatus for analyzing endocrine-disrupting substances, which is an on-line GPC-GC/MS apparatus comprising a gel permeation chromatography (GPC) column (1), means (P₁) for injecting a carrier (eluent) into the GPC column, a sample inlet part (2) provided on the flow path connecting the carrier injection means (P₁) and the GPC column, flow path-changeover means (3) for introducing a necessary GPC fraction to a sample accumulating part (4), connected to the discharge part of the GPC column (1), means P₂) for introducing the GPC fractions accumulated in the sample accumulating part (4) into a gas chromatograph-mass spectrometer (GC/MS), and GC/MS (5), wherein the GPC column is a polyvinyl alcohol-base hard gel-packed column or a polystyrene-base hard gel-packed column and the low molecular weight fraction after removing high molecular weight components and water content from a vital sample solution containing endocrine-disrupting substances through the GPC column (1) is accumulated in the sample accumulating part (4) and then injected all at once into the GC/MS (5) to perform the identification and determination of endocrine-disrupting substances in the sample.
(7) The apparatus for analyzing endocrine-disrupting substances as described in (6) above, comprising a means for detecting the analysis-disturbing components and water between gel permeation chromatography (GPC) column (1) and flow path-changeover means (3).
(8) The apparatus for analyzing endocrine-disrupting substances as described in (6) or (7) above, comprising a recording means for storing qualitative/quantitative data of GC/MS concerning a plurality of endocrine-disrupting substances and calculation means for correcting these data based on the GC/MS actual value corresponding to the internal standard in the sample may be provided, whereby the identification and determination of endocrine-disrupting substances can be automatically performed by referring to the GC/MS data corrected based on the GC/MS actual value in the sample.

### BRIEF DESCRIPTION OF DRAWINGS

Fig. 1 is a flow chart showing the outline of the analysis method of the present invention.
Fig. 2 is a graph schematically showing the change in the component passing through GPC with the passage of time in the analysis method of the present invention.
Fig. 3 is a block diagram showing the fundamental structure of the analysis apparatus of the present invention.
Fig. 4 is a schematic view showing the operation of the fraction-splitting means in the analysis apparatus of the present invention.

### DETAILED DESCRIPTION OF THE INVENTION

### Analysis Method

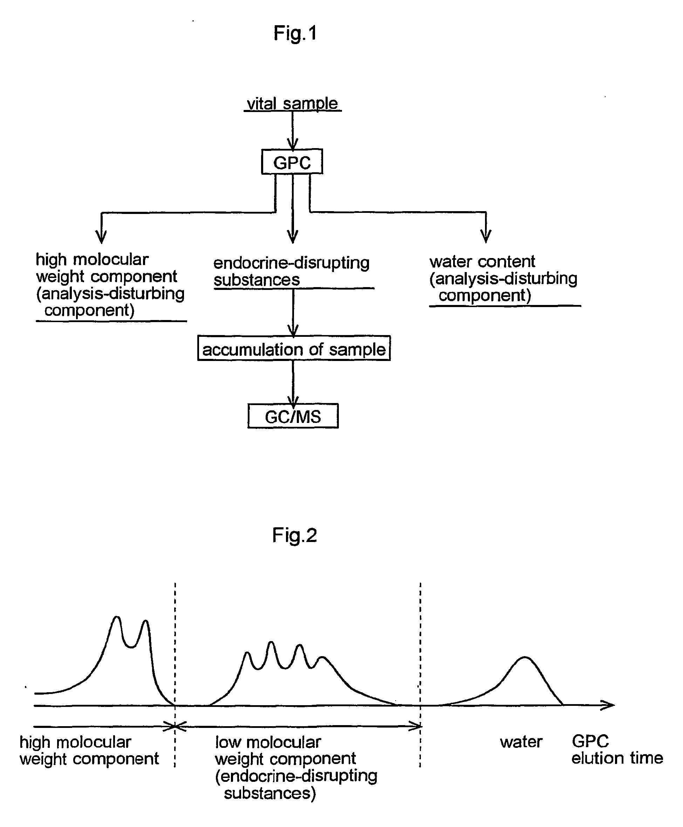

Fig. 1 schematically shows the analysis method of the present invention.

As shown in the Figure, according to the method of the present invention, a solution of a vital sample selected from blood, cord blood, urine, mother's milk or biostructure containing endocrine-disrupting substances is passed through a gel permeation chromatography (GPC) column to fractionate and collect the low molecular weight fraction containing endocrine-disrupting substances. The vital sample solution used here may be either a vital sample collected in the liquid state or a solid or semisolid vital sample formed into a liquid state. Then, the endocrine-disrupting substances-containing fraction obtained by the GPC column is introduced into a gas chromatograph-mass spectrometer (GC/MS) and analyzed.

The fractionation in the GPC column is fundamentally a selection by the molecular size. In the GPC fractionation of the present invention, substances having a relatively large molecular weight, such as fats, contained in a large amount in a vital sample and coming to a disturbance of the GC/MS analysis in the later stage pass through the column in an early time after the injection of sample and the water content runs off almost at the end. The molecular weight of endocrine-disrupting substances is at most 1,000 or less and in most cases, 500 or less and as schematically shown in Fig. 2, the endocrine-disrupting substances pass through the column later than fat but earlier than the water content. Accordingly, collection of the fraction is carried out after the completion of elution of fat and the like until the initiation of elution of water content.

In the present invention, the fat and water content as main components of the sample are previously measured on the runoff time, and the elution conditions such as construction of column, components of eluent and flow rate are determined so that the endocrine-disrupting substances can be fractionated and collected by collecting the fraction in the range approximately from 3 to 10 minutes after the injection of sample is initiated. It is also possible to collect the fraction after the elution of fat and before the elution of water content while confirming the eluate from the GPC column by detection means such as differential refractive index detector.

Here, the vital sample contains fat-soluble high molecular weight components such as dye, in addition to fat, however, when the column described later is used, these components all can be included in the fat fraction.

In the present invention, the packing material for use in the GPC column is a polyvinyl alcohol-base hard gel or a polystyrene-base hard gel. The hard gel is a gel less undergoing swelling/shrinkage due to the solvent. The polyvinyl alcohol-base hard gel and the polystyrene-base hard gel are a highly crosslinked polyvinyl alcohol-base copolymer and a highly crosslinked polystyrene-base copolymer, respectively.

The polyvinyl alcohol-base or polystyrene-base hard gel packing material suitably used in the present invention is a gel having excellent solvent replaceability and exhibiting excellent strength when swelled. Specifically, assuming that the degree of swelling at the dipping in dichloromethane (100%) is 100, the packing material preferably satisfies the conditions such that the degree of swelling in acetone (100%) is 70 to 100, more preferably 80 to 95, and the degree of swelling in acetone/cyclohexane = 50/50 (v/v%) and in ethyl acetate/cyclohexane = 50/50 (v/v%) is from 85 to 100. By satisfying these conditions, the problem (memory effect) that when the column is repeatedly used, the prior fractionation treatment affects the fractionation performance can be overcome.

The average particle size of the packing material is preferably on the order of 4 to 20 µm and the exclusion limit molecular weight is, in terms of polystyrene, preferably 500 to 40,000, more preferably 500 to 900 (these are each a value when the eluent is tetrahydrofuran(THF) or chloroform). Such a packing material is commercially available, for example, under the trade name of Shodex (registered trademark) CLNpak EV series or Shodex (registered trade mark) CINpak PAE series produced by Showa Denko K.K.

The dimension of column is not particularly limited, however, the inner diameter is usually from 1 to 20 mm, preferably from 1 to 4.6 mm, more preferably from 2 to 3 mm, and the column length is from 5 to 40 cm, preferably from 10 to 25 cm.

In the present invention, the GPC fractionation treatment is preformed by passing an eluent through the above-described column and injecting a sample into the flow. Examples of the eluent include pure water, a salt-containing aqueous solution (0.5 M or less), dimethylsulfoxide(DMSO), methanol, ethanol, acetonitrile, propanol, dimethylformamide(DMF), acetone, dioxane, tetrahydrofuran(THF), ethyl acetate, chloroform, toluene, dichloromethane, hexane, cyclohexane, cyclopentane and a mixed solvent thereof. Among these, preferred are acetone, ethyl acetate, toluene, dichloromethane, cyclohexane, cyclopentane and a mixed solvent thereof.

In particular, a mixed solvent of acetone and cyclohexane, a mixed solvent of ethyl acetate and cyclohexane and a mixed solvent of dichloromethane and cyclohexane are preferred. By the addition of cyclohexane, the polarity of eluent decreases and the separation of endocrine-disrupting substances as an objective of analysis from the analysis disturbing components such as fat can be optimized. The mixing ratio (v/v%) is preferably from 100/0 to 10/90, more preferably from 30/70 to 20/80 for the mixed solvent of acetone and cyclohexane, preferably from 90/10 to 10/90 for the mixed solvent of ethyl acetate and cyclohexane, and preferably from 100/0 to 10/90 for the mixed solvent of dichloromethane and cyclohexane.

The flow rate of the eluent is usually from 0.05 to 1 ml/min, preferably from 0.05 to 0.2 ml/min. If the flow rate is too large, the dilution ratio becomes large at the fractionation and collection, whereas if the flow rate is too small, the fractionation takes a time.

In the present invention, the GPC column and the GC/MS are on-line connected via flow path-changeover means. By on-line connecting these and using an eluent as the carrier, an automatic analysis is facilitated. Furthermore, since the operation is performed in a closed system, the contamination from analysis instruments or environment can be suppressed to a minimum.

Also, the analysis is preferably performed by accumulating the GPC fractions containing endocrine-disrupting substances in the line and then introducing the GPC fractions all at once into the GC/MS. By introducing the accumulated GPC fractions as a whole into GC/MS, the detection sensitivity can be elevated.

The GC/MS may be a commonly used apparatus, however, in the case where isomers of, for example, PCB need to be individually determined, the separation in the GC must be enhanced by using a capillary column or the like.

The method of the present invention can be used for various vital samples selected from blood, cord blood, urine, mother's milk and biostructure. The vital sample is, if desired, subjected to a pretreatment such as removal of protein. Usually, fat extraction is performed on the sample collected from an organism and the obtained fat content is dissolved in a solvent having the same composition as the eluent and used for the analysis. For the fat extraction, the method of Patterson (see, D.G. Patterson et al., Anal. Chem., 59, 2000-2005 (1987)) can be used.

Out of the above-described packing materials for GPC column, the polyvinyl alcohol-base hard gel can be used for samples having a water content up to 10% and the polystyrene-base hard gel can be used for samples having a water content up to 2%. If the water content exceeds this level, stable fractionation can be hardly attained. Accordingly, in the case where the sample measured has a larger water content than this range, the water content is reduced by an appropriate pretreatment. For example, the sample is dehydrated by adding anhydrous sodium sulfate or the like and, if desired, further concentrated by pressure reduction, nitrogen spraying or the like.

According to the analysis method of the present invention, various chemical substances suspected of having an endocrine-disrupting action can be analyzed. Examples of these chemical substances include chemical substances having a molecular weight of 1,000 or less, such as dioxins, benzo [a]pyrene, benomyl, vinclozolin, hexachlorobenzene, hexachlorocyclohexane, ethylparathion, carbaryl, chlordane, trans-nonachlor, oxychlordane, 1,2-dibromo-3-chloropropane, DDT (dichlorodiphenyl trichloroethane), DDE (dichlorodiphenyl dichloroethylene, a DDT metabolite), DDD (dichlorodiphenyl dichloroethane, a DDT metabolite), kelthane, aldrin, endrin, dieldrin endosulfan, heptachlor, heptachlorepoxide, malathion, methomyl, methoxychlor, mirex, toxaphen, aldicarb, kepone, cypermethrin, esfenvalerate, fenvalerate, permethrin, 2,4,5-trichlorophenoxyacetic acid, 2,4-dichlorophenoxyacetic acid, atrazin, arachlor, simazine, nitrofen, trifluralin, metribuzin, amitrole, pentachlorophenol, tributyltin, triphenyltin, 2,4-dichlorophenol, bisphenol A, polybrominated biphenyls, polychlorinated biphenyls, octachlorostyrene, 4-nitrotoluene, styrene dimers and trimers, benzophenone, alkylphenol (C5, C6, C7, C8 and C9), nonylphenol, 4-octylphenol, n-butylbenzene, di-2-ethylhexyl phthalate, butyl benzyl phthalate, di-n-butyl phthalate, dicyclohexyl phthalate, diethyl phthalate, di-2-ethylhexyl adipate, dipentyl phthalate, dihexyl phthalate, dipropyl phthalate, polychlorinated naphthalenes, PAH (polycyclic aromatic hydrocarbon), NOAH (nitro polycyclic aromatic hydrocarbon; nitroarene) and estradiols. The analysis method of the present invention is particularly effective for dioxins, polybrominated biphenyls, polychlorinated biphenyls and phthalic acid esters.

### Apparatus for Analysis

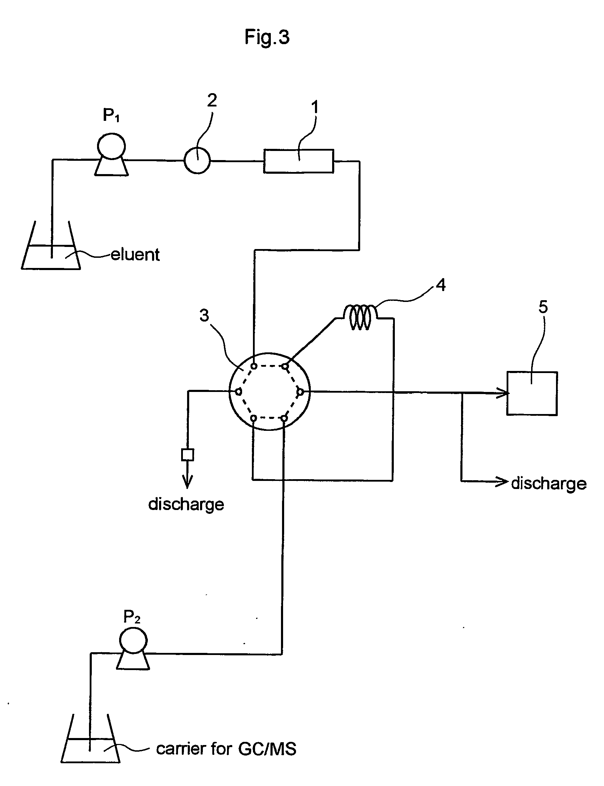

Fig. 3 is a view schematically showing the apparatus for analyzing endocrine-disrupting substances of the present invention.

As shown in the Figure, the apparatus for analyzing endocrine-disrupting substances of the present invention is an on-line GPC-GC/MS apparatus comprising a gel permeation chromatography (GPC) column (1), pump means (P₁) for injecting a carrier (eluent) into the GPC column, a sample inlet part (2) provided on the flow path connecting the pump means (P₁) and the GPC column, flow path-changeover means (3), gas chromatograph-mass spectrometer (GC/MS) (5) and pump means (P₂).

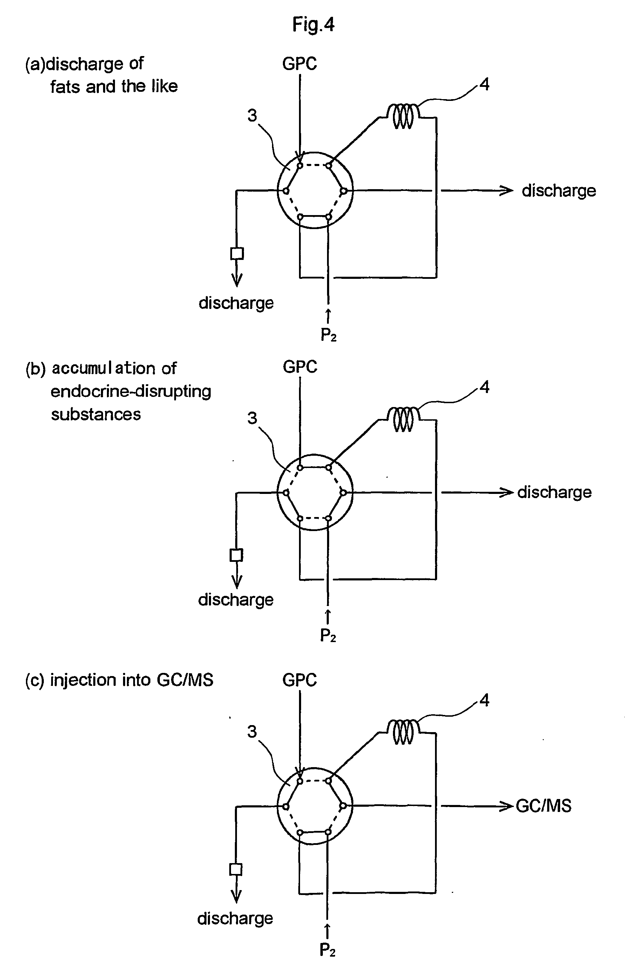

The flow path-changeover means (3) is connected to the discharge part of the GPC column (1), the sample accumulating part (4), the pump means (P₂) and GC/MS, and this means is, for example, a 6-port valve as shown in the Figure. At the time of injecting a sample, each port of the valve is connected as shown in Fig. 4 (a) and the solution flown out from the GPC column (1) is introduced as it is into a waste reservoir ("DISCHARGE" in the Figure). When the outflow of high molecular weight components is completed, each port of the valve is changed over as shown in Fig. 4(b) and the fraction containing endocrine-disrupting substances is introduced into the sample accumulating part (4) and accumulated. The sample accumulating part (4) is, for example, a looped tube (sample loop). When the collection of endocrine-disrupting substances is completed, each port of the valve is changed over as shown in Fig. 4(c) and the destination from the sample accumulating part (4) is changed over from the "DISCHARGE" to GC/MS by an appropriate valve (not shown in the Figure). By the driving of pump means (P₂), the sample in the sample accumulating part (4) is introduced into GC/MS. The volume of the sample accumulating part (4) depends on the amount of sample injected, the flow rate of eluent and the like, but is usually from 1 to 50 times, preferably on the order of from 5 to 20 times larger than the amount of sample injected.

The GPC column is suitably a polyvinyl alcohol-base hard gel-packed column or a polystyrene-base hard gel-packed column and the details thereon are as described above. Although not shown in Fig. 4, means for detecting the analysis-disturbing components and water content may be provided between the GPC column (1) and the flow path-changeover means (3). Examples of the detection means include a differential refractive index detector.

Furthermore, recording means for storing qualitative/ quantitative data of GC/MS concerning a plurality of endocrine-disrupting substances and calculation means for correcting these data based on the GC/MS actual value corresponding to the internal standard in the sample may be provided, whereby the identification and determination of endocrine-disrupting substances can be automatically performed by referring to the GC/MS data corrected based on the GC/MS actual value in the sample. The endocrine-disrupting substances include a large number of compounds, and with respect to PCB alone, there are 209 kinds of isomers. When the GC/MS actual values thereof are stored as a data base and at the actual analysis, calibrated based on the internal standard, the identification and determination of various endocrine-disrupting substances can be performed simultaneously.

### BEST MODE FOR CARRYING OUT THE INVENTION

The method of the present invention is described in greater detail below by referring to Examples.

### Example 1

A cord serum, a maternal serum and a mother's milk were analyzed on the PCB amount and on the organic chlorine-base agrochemical.

### (1) Sample

Maternal serum, cord serum and mother's milk samples collected from 10 mothers were used (30 samples in total). These samples were used for the analysis test after obtaining the consent from the subjects.

### (2) Apparatus

An on-line GPC-GC/MS apparatus having a structure shown in Fig. 3 was used.

### GPC:

The GPC column used was Shodex (registered trademark) EV-200AC Column (polystyrene-base hard gel column having an inner diameter of 2 mm and a length of 150 mm) manufactured by Showa Denko K.K.
GC/MS:

A programmed temperature vaporizer (PTV) was equipped and in the GC part, an inactivated silica tube (2 m (length) × 0.53 mm (inner diameter)) and capillary columns DB-5 (0.5 m (length) × 0.25 mm (inner diameter), film thickness: 0.25 µm; and 60 m (length) × 0.25 mm (inner diameter), film thickness: 0.1 µm), both manufactured by J & W Scientific, were used. After the injection of solution, the temperature was kept at 83°C (for 5 minutes) and then elevated to 172°C at 1°C/min and further to 270°C at 50°C/min. The measurement was performed at 280°C.

### (3) Preliminary Test

Acetone/cyclohexane (3:7) (v/v) was passed through the GPC column for use in the main test at a flow rate of 0.1 ml/min and thereto a sample containing a vital fat, a PCB sample and water were injected and measured on the elution time from the GPC column. As a result, it was confirmed the elution of fat and dye component was completed in 0 to 3.2 minutes after the injection, the elution of PCB sample was completed in 3.2 to 5.2 minutes and the water content started flowing out after 5.2 minutes.

A calibration curve was prepared for 209 kinds of PCB isomers. The detection limit of the apparatus was 5 pg (EI (electron impact ionization)) for tetra- to hexa-chlorinated PCB, 1 pg (NCI (negative chemical ionization)) for hepta- to octa-chlorinated PCB, 0.2 pg (NCI) for nona- to deca-chlorinated PCB, 2 pg (NCI) for hexachlorobenzene, and 20 pg (EI) for HCHs·heptachlors·dieldrins·DDTs.

In the main test below, the internal standard substances used were 3 kinds of PCBs marked by ¹³C (3,3',4,4'-tetrachlorobiphenyl, 3,3',4,4',5-pentachlorobiphenyl, 3,3',4,4',5,5'-hexachlorobiphenyl), hexachlorobenzene (HCB) and p,p'-dichlorodiphenyl dichloroethylene (DDE).

### (4) Main Test

The cord serum (8 ml), the maternal serum (4 ml) and the mother's milk (2 ml) each was subjected to fat extraction according to the method by Patterson et al. More specifically, the sample was charged into a separating funnel, the internal standard substance was added, and then saturated ammonium sulfate, ethanol and hexane were added at a ratio of about 1:1:3. After shaking to cause separation into two layers, the aqueous layer was transferred to a different separating funnel and hexane was added thereto. After shaking to cause separation into two layers, the hexane layer was combined with the organic layer obtained at the first separation, washed with water, dried over anhydrous sodium sulfate, filtered, concentrated and dried. Thereafter, the total weight of fat was measured. The average fat amount was 0.197% in the cord serum, 0.895% in the maternal serum and 3.04% in the mother's milk.

Acetone/cyclohexane (3:7) (v/v) was passed through the GPC column at a flow rate of 0.1 ml/min and 20 µl of a solution obtained by dissolving the fat extracted above in 50 to 100 µl of a solvent having the same composition was injected into the GPC.

Based on the results in the preliminary measurement, the elution composition of 0 to 3.2 minutes after the injection of sample was discarded and the fraction of 3.2 to 5.2 minutes was collected in a sample loop (storage amount: 200 µl) and introduced into GC/MS at 5.2 to 7.5 minutes.

As a result, it was possible to separate 209 kinds of isomers of PCB, measure the concentration of each isomer and perform the determination from a relative calibration curve to an approximate internal standard. The results are shown in Table 1 together with analysis results of other endocrine-disrupting substances.

**Table 1**

| Concentration of Endocrine-Disrupting Substance in Vital Sample (in fat, unit: ppb) | | | |
|---|---|---|---|
| Name of Compound | Mother's Milk | Maternal Serum | Cord Serum |
| PCB¹⁾ | 95.02 | 98.52 | 60.90 |
| Chlordanes | 38.08 | 34.43 | 31.44 |
| HCB²⁾ | 14.08 | 15.71 | 14.14 |
| HCH³⁾ | 315.58 | 271.49 | 189.54 |
| DDE⁴⁾ | 343.62 | 314.48 | 278.63 |
| Heptachlor | 0.30 | 1.17 | 1.20 |
| HCE⁵⁾ | 3.06 | 2.61 | 1.55 |

| | | | |
|---|---|---|---|
| 1) PCB: polychlorinated biphenyl 2) HCB: hexachlorobenzene 3) HCH: hexachlorocyclohexane 4) DDE: p,p'-dichlorodiphenyl dichloroethylene 5) HCE: heptachloroepoxide | | | |

In the Table, the concentration of PCB is the total of concentrations of respective isomers. On comparison among compositions of each isomer of PCB, hexa- and hepta-chlorinated PCBs were accumulated in a high concentration in every one of mother's milk, maternal serum and cord serum. On comparison among compositions by the number of chlorines, a notable difference was not found between the maternal serum and the cord serum. However, #118 (pentachlorinated form, the # number is the list number by IUPAC, hereinafter the same), #168 (hexachlorinated form), #153 (hexachlorinated form), #170 (heptachlorinated form) and the like revealed a significantly low (confidence coefficient: 95% or more) value in the cord serum as compared with the maternal serum.

The content in mother's milk was analyzed on dioxins and coplanar PCB having a high toxicity like dioxins among PCB isomers and the results obtained are shown in Table 2.

**Table 2**

| Content of Dioxins and Coplanar PCB in Mother's Milk | |
|---|---|
| Compound | Content in Mother's Milk (µg/g of fat) |
| Dioxins | 14.6 |
| Non-ortho coplanar PCB | 3.2 |
| Mono-ortho coplanar PCB | 3.0 |

In the Table, the content of non-ortho coplanar PCB is the total content of those where no chlorine is substituted at the ortho-position, namely, 3,4,4',5-tetrachlorobiphenyl, 3,3',4,4'-tetrachlorobiphenyl, 3,3',4,4',5-pentachlorobiphenyl and 3,3',4,4',5,5'-hexachlorobiphenyl, and the content of mono-ortho coplanar PCB is the total content of those where only one chlorine is substituted at the ortho-position, namely, 2',3,4,4',5-pentachlorobiphenyl, 2,3',4,4',5-pentachlorobiphenyl, 2,3,3',4,4'-pentachlorobiphenyl, 2,3,4,4',5-pentachlorobiphenyl, 2, 3' , 4, 4' , 5, 5'-hexachlorobiphenyl, 2,3,3',4,4',5-hexachlorobiphenyl, 2,3,3',4,4',5'-hexachlorobiphenyl and 2,3,3',4,4',5,5'-heptachlorobiphenyl.

The concentration of chlordanes is the total concentration of γ-chlordane, cis-chlordane, oxychlordane, trans-nonachlor and cis-nonachlor and according to the method of the present invention, each concentration except for cis-chlordane in the cord serum could be determined. The results are shown in Table 3.

**Table 3**

| Concentration of Chlordane in Vital Sample (in fat, unit: ppb) | | | |
|---|---|---|---|
| Name of Compound | Mother's Milk | Maternal Serum | Cord Serum |
| γ-Chlordane | 1.66 | 1.43 | 1.64 |
| cis-Chlordane | 0.93 | 0.86 | - |
| Oxychlordane | 6.49 | 6.30 | 6.66 |
| trans-Nonachlor | 19.58 | 17.08 | 16.35 |
| cis-Nonachlor | 2.25 | 1.54 | 0.91 |

### Example 2

The content of phthalic acid esters in the umbilical cord was analyzed by the following method. Here, all the instruments for use in the analysis of phthalic acid esters were thoroughly washed with acetone·hexane for environmental analysis, wrapped with aluminum foil, dried and then used without delay.

### (a) Preparation of Sample

1 g of umbilical cord was cut into pieces using scissors and the umbilical cord pieces were precisely weighed to 0.5 g, placed in a precipitation tube for centrifugal separation (centrifugal precipitation tube) and after adding 2 ml of a solution obtained by dissolving a surrogate (radioisotope labeling compound) in acetone, homogenized with a Polytron for 1.5 minute. The homogenized mixture was centrifuged for 10 minutes at 8,000 rpm and the supernatant was split into a test tube.

### (b) Apparatus for Analysis

Shodex (registered trademark) MSpak GF-310 2D (column of 2 mm (inner diameter) x 150 mm (length) packed with a polyvinyl alcohol-base hard gel, produced by Showa Denko K.K.) was used as the GPC column and a differential refractive index detector (Shodex RI-71) was connected to the outflow part of the GPC column.

### (c) Procedure of Test

The analysis was performed in the same manner as in Example 1 except that acetone (for environmental analysis, produced by Wako Pure Chemical Industries, Ltd.) was used as the moving phase and the components were detected by the differential refractive index detector before changing over the path to GC/MS.

In the measurement by the differential refractive index detector, the fat content started flowing out at 3.8 minutes and showed a peak out at 4.4 minutes. On the other hand, phthalic acid esters flowed out between 4.8 and 6.1 minutes. Accordingly, the fraction of 4.8 to 6.1 minutes was collected. The water content was detected after 6.1 minutes. The test was repeated 5 times and every time the measurement in each test was completed, the line was washed by passing an eluent for 135 seconds.

Di-n-butyl phthalate and di-2-ethylhexyl phthalate were determined on the relative coefficient of variation (a value obtained by dividing the standard deviation by the average value) in the analysis time (retention time) in the test repeated 5 times. As a result, the value was 0.1% in the case of di-n-butyl phthalate and 0.0% in the case of di-2-ethylhexyl phthalate. Thus, it was confirmed that highly reliable analysis results can be obtained by the method of the present invention.

### Example 3

PCBs in serum were automatically analyzed in the same manner as in Example 1 using a polystyrene-base hard gel column. The analysis values on all isomers of PCB could be obtained within about 1 hour.

### INDUSTRIAL APPLICABILITY

As described in the foregoing pages, according to the analysis method of the present invention, PCB and other endocrine-disrupting substances can be automatically analyzed with a small amount of serum or cord serum. In the study on the activity of endocrine-disrupting substances, their moving state from mother to fetus is an important problem to be solved. Therefore, the present invention of enabling rapid analysis on blood including cord blood and on mother's milk has an important practical meaning.

Furthermore, according to the analysis method of the present invention, purification, concentration and measurement can be automatically performed on the line, so that not only the measurement can be automatized but also contamination at the preparation (e.g., extraction, concentration) of sample can be prevented. In the monitoring examination of analyzing many samples, external contamination at the analysis can be eliminated and therefore, the analysis method of the present invention is particularly useful for the analysis of trace components.

## Claims

1. A method for analyzing endocrine-disrupting substances in a vital sample selected from blood, cord blood, urine, mother's milk or biostructure, comprising on-line connecting a gel permeation chromatography (GPC) column and a gas chromatograph-mass spectrometer (GC/MS) via line change-over means, passing a blood, cord blood, urine, mother's milk or biostructure solution containing endocrine-disrupting substances through the GPC column to remove high molecular weight components and water content, accumulating the remaining low molecular weight fractions in the line, and then introducing the fractions all at once into GC/MS to automatically analyze the fractions wherein the GPC column is a polyvinyl alcohol-base hard gel-packed column or a polystyrene-base hard gel-packed column.

2. The method for analyzing endocrine-disrupting substances as claimed in claim 1, wherein the fat content, dye and water content in the vital sample solution are removed by the GPC column.

3. The method for analyzing endocrine-disrupting substances as claimed in claim 1, wherein polyvinyl alcohol-base hard gel is used as GPC column packing material, comprising reducing water content in the vital sample to 10% or less.

4. The method for analyzing endocrine-disrupting substances as claimed in claim 1, wherein polystyrene-base hard gel is used as GPC column packing material, comprising reducing water content in the vital sample to 2% or less.

5. The method for analyzing endocrine-disrupting substances as claimed in claim 1, wherein a mixed solvent of acetone and cyclohexane, a mixed solvent of ethyl acetate and cyclohexane or a mixed solvent of dichloromethane and cyclohexane is used as an eluent for the GPC column.

6. An apparatus for analyzing endocrine-disrupting substances, which is an on-line GPC-GC/MS apparatus comprising a gel permeation chromatography (GPC) column (1), means (P₁) for injecting a carrier (eluent) into the GPC column, a sample inlet part (2) provided on the flow path connecting the carrier injection means (P₁) and the GPC column, flow path-changeover means (3) for introducing a necessary GPC fraction to a sample accumulating part (4), connected to the discharge part of the GPC column (1), means (P₂) for introducing the GPC fractions accumulated in the sample accumulating part (4) into a gas chromatograph-mass spectrometer (GC/MS), and GC/MS (5), wherein the GPC column is a polyvinyl alcohol-base hard gel-packed column or a polystyrene-base hard gel-packed column and the low molecular weight fraction after removing high molecular weight components and water content from a vital sample solution containing endocrine-disrupting substances through the GPC column (1) is accumulated in the sample accumulating part (4) and then injected all at once into the GC/MS (5) to perform the identification and determination of endocrine-disrupting substances in the sample.

7. The apparatus for analyzing endocrine-disrupting substances as claimed in claim 6, comprising a means for detecting the analysis-disturbing components and water between gel permeation chromatography (GPC) column (1) and flow path-changeover means (3).

8. The apparatus for analyzing endocrine-disrupting substances as claimed in claim 6 or 7, comprising a recording means for storing qualitative/quantitative data of GC/MS concerning a plurality of endocrine-disrupting substances and calculation means for correcting these data based on the GC/MS actual value corresponding to the internal standard in the sample may be provided, whereby the identification and determination of endocrine-disrupting substances can be automatically performed by referring to the GC/MS data corrected based on the GC/MS actual value in the sample.

## Patentansprüche

1. Verfahren zum Analysieren von Endokrin-unterbrechenden Substanzen in einer Vitalprobe, die unter Blut, Nabelschnurblut, Urin, Muttermilch- oder Biostruktur ausgewählt ist, welches das Aneinanderkoppeln einer Gelpermeationschromatographie (GPC)-Säule und eines Gaschromatographie-Massenspektrometers (GC/MS) über ein Mittel zur Leitungsumschaltung, das Durchleiten einer Blut-, Nabelschnurblut-, Urin-, Muttermilch- oder Biostrukturlösung, die Endokrin-unterbrechende Substanzen enthält, durch die GPC-Säule zum Entfernen von hochmolekularen Bestandteilen und Wasseranteil, das Anhäufen der verbleibenden niedermolekularen Fraktionen in der Leitung und das anschließende Einführen aller Fraktionen auf einmal in das GC/MS zur automatischen Analyse der Fraktionen umfasst, wobei die GPC-Säule eine Hartgel-gepackte Säule auf Polyvinylalkohol-Basis oder eine Hartgel-gepackte Säule auf Polystyrol-Basis ist.

2. Verfahren zum Analysieren von Endokrin-unterbrechenden Substanzen nach Anspruch 1, wobei der Fettanteil, Farbstoffe und Wasseranteil in der Vitalprobenlösung durch die GPC-Säule entfernt werden.

3. Verfahren zum Analysieren von Endokrin-unterbrechenden Substanzen nach Anspruch 1, wobei das Hartgel auf Polyvinylalkohol-Basis als GPC-Säulenpackungsmaterial eingesetzt wird, wobei das Verfahren das Verringern des Wassergehalts in der Vitalprobe auf 10 % oder weniger umfasst.

4. Verfahren zum Analysieren von Endokrin-unterbrechenden Substanzen nach Anspruch 1, wobei das Hartgel auf Polystyrol-Basis als GPC-Säulenpackungsmaterial eingesetzt wird, wobei das Verfahren das Verringern des Wassergehalts in der Vitalprobe auf 2 % oder weniger umfasst.

5. Verfahren zum Analysieren von Endokrin-unterbrechenden Substanzen nach Anspruch 1, wobei ein Lösungsmittelgemisch aus Aceton und Cyclohexan, ein Lösungsmittelgemisch aus Ethylacetat und Cyclohexan oder ein Lösungsmittel aus Dichlormethan und Cyclohexan als Elutionsmittel für die GPC-Säule eingesetzt wird.

6. Apparat zum Analysieren von Endokrin-unterbrechenden Substanzen, der ein gekoppelter GPC-GC/MS-Apparat ist, der eine Gelpermeationschromatographie (GPC)-Säule (1), Mittel (P1) zum Einspritzen eines Trägers (Elutionsmittel) in die GPC-Säule, einen Probeneinlassteil (2) auf dem Flussweg, der das Trägereinspritzmittel (P1) und die GPC-Säule verbindet, Flusswegumschaltmittel (3) zum Einführen einer notwendigen GPC-Fraktion in einen Probenakkumulationsteil (4), verbunden mit dem Auslassteil der GPC-Säule (1), Mittel (P2) zum Einführen der in dem Probenakkumulationsteil (4) angehäuften GPC-Fraktionen in ein Gaschromatographie-Massenspektrometer (GC/MS), und GC/MS (5) umfasst, wobei die GPC-Säule eine Hartgel-gepackte Säule auf Polyvinylalkohol-Basis oder eine Hartgel-gepackte Säule auf Polystyrol-Basis ist und die niedermolekulare Fraktion nach dem Entfernen von hochmolekularen Bestandteilen und Wasser aus einer Endokrin-unterbrechende Substanzen enthaltenden Vitalprobenlösung durch die GPC-Säule (1) in dem Probenakkumulationsteil (4) angehäuft wird und dann auf einmal in die GC/MS (5) eingespritzt wird, um die Identifizierung und Bestimmung der Endokrin-unterbrechenden Substanzen in der Probe durchzuführen.

7. Apparat zum Analysieren von Endokrin-unterbrechenden Substanzen nach Anspruch 6, welcher zwischen der Gelpermeationschromatographie (GPC)-Säule (1) und dem Flusswegwechselmittel (3) ein Mittel zum Nachweisen der die Analyse störenden Komponenten und Wasser umfasst.

8. Apparat zum Analysieren von Endokrin-unterbrechenden Substanzen nach Anspruch 6 oder 7, welcher ein Aufzeichnungsmittel zum Speichern von eine Vielzahl von Endokrin-unterbrechenden Substanzen betreffenden qualitativen/quantitativen Daten der GC/MS umfasst, und es können Berechnungsmittel zum Korrigieren dieser Daten, die auf den tatsächlichen GC/MS-Werten beruhen, entsprechend dem inneren Standard in der Probe, bereitgestellt werden, wobei die Identifizierung und Bestimmung von Endokrin-unterbrechenden Substanzen automatisch durchgeführt werden kann, indem auf die GC/MS-Daten Bezug genommen wird, die auf der Grundlage der tatsächlichen Werte aus der GC/MS in der Probe korrigiert wurden.

## Revendications

1. Procédé d'analyse de substances perturbant les sécrétions endocrines dans un échantillon vital sélectionné parmi le sang, le sang de cordon ombilical, l'urine, le lait maternel ou une biostructure, comprenant la connexion en ligne d'une colonne de chromatographie à perméation de gel (GPC) et d'un chromatographe gazeux-spectromètre de masse (GC/MS) par un moyen de commutation de ligne, le passage d'une solution de sang, de sang de cordon ombilical, d'urine, de lait maternel ou d'une biostructure contenant des substances perturbant les sécrétions endocrines sur la colonne de GPC pour retirer les composants de masse moléculaire élevée et la teneur en eau, l'accumulation des fractions de masse moléculaire faible restantes dans la ligne et ensuite l'introduction immédiate des fractions dans GC/MS pour analyser automatiquement les fractions, où la colonne de GPC est une colonne garnie de gel dur à base d'alcool polyvinylique ou une colonne garnie de gel dur à base de polystyrène.

2. Procédé d'analyse des substances perturbant les sécrétions endocrines selon la revendication 1, où la teneur en graisse, la teneur en colorant et en eau dans la solution d'échantillon vital sont retirées par la colonne de GPC.

3. Procédé d'analyse des substances perturbant les sécrétions endocrines selon la revendication 1, où le gel dur à base d'alcool polyvinylique est utilisé comme matériau de garnissage de la colonne de GPC, comprenant la réduction de la teneur en eau de l'échantillon vital à 10 % ou moins.

4. Procédé d'analyse des substances perturbant les sécrétions endocrines selon la revendication 1, où le gel dur à base de polystyrène est utilisé comme matériau de garnissage de la colonne de GPC, comprenant la réduction de la teneur en eau de l'échantillon vital à 2 % au moins.

5. Procédé d'analyse des substances perturbant les sécrétions endocrines selon la revendication 1, où un solvant mixte d'acétone et de cyclohexane, un solvant mixte d'acétate d'éthyle et de cyclohexane ou un solvant mixte de dichlorométhane et de cyclohexane est utilisé comme éluant pour la colonne de GPC.

6. Appareil d'analyse des substances perturbant les sécrétions endocrines, lequel est un appareil de GPC-GC/MS en ligne comprenant une colonne de chromatographie à perméation de gel (GPC) (1), un moyen (P₁) d'injection de vecteur (éluant) dans la colonne de GPC, une partie d'admission de l'échantillon (2) ménagée sur la voie d'écoulement reliant le moyen d'injection de vecteur (P₁) et la colonne de GPC, un moyen de commutation de la voie d'écoulement (3) destiné à introduire une fraction de GPC nécessaire dans une partie d'accumulation d'échantillon (4), connecté à la partie d'évacuation de la colonne de GPC (1), un moyen (P₂) d'introduction des fractions de GPC accumulées dans la partie d'accumulation d'échantillon (4) dans un chromatographe gazeux-spectromètre de masse (GC/MS) et un GC/MS (5), où la colonne de GPC est une colonne garnie d'un gel dur à base d'alcool polyvinylique ou une colonne garnie d'un gel dur à base de polystyrène et la fraction de masse moléculaire faible après élimination des composants de masse moléculaire élevée et de la teneur en eau d'une solution d'échantillon vital contenant des substances perturbant les sécrétions endocrines sur la colonne de GPC (1) est accumulée dans la partie d'accumulation d'échantillon (4) et est alors injectée immédiatement dans GC/MS (5) pour procéder à l'identification et à la détermination des substances perturbant les sécrétions endocrines dans l'échantillon.

7. Appareil d'analyse des substances perturbant les sécrétions endocrines selon la revendication 6, comprenant un moyen de détection des composants perturbant l'analyse et de l'eau entre la colonne de chromatographie à perméation de gel (GPC) (1) et le moyen de commutation de voie d'écoulement (3).

8. Appareil d'analyse des substances perturbant les sécrétions endocrines selon la revendication 6 ou 7, comprenant un moyen d'enregistrement destiné à stocker les données qualitatives/quantitatives de GC/MS concernant une pluralité de substances perturbant les sécrétions endocrines et il peut être fourni un moyen de calcul pour corriger ces données d'après la valeur réelle de GC/MS correspondant à l'étalon interne dans l'échantillon, l'identification et la détermination des substances perturbant les sécrétions endocrines pouvant être réalisées automatiquement par référence aux données de GC/MS corrigées d'après la valeur réelle de GC/MS dans l'échantillon.
